(19) Europäisches Patentamt / European Patent Office / Office européen des brevets

(11) **EP 4 775 436 A1**

(12) **EUROPEAN PATENT APPLICATION**

(43) Date of publication:
**15.07.2026 Bulletin 2026/29**

(21) Application number: **25151499.8**

(22) Date of filing: **13.01.2025**

(51) International Patent Classification (IPC):
*B60L 15/20* (2006.01)    *B62D 59/00* (2006.01)

(52) Cooperative Patent Classification (CPC):
**B60L 15/20; B62D 53/06; B62D 59/04;**
B60L 2200/28; B60L 2240/16; B60L 2240/26;
B60L 2240/423; B60L 2240/461

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Volvo Truck Corporation**
**405 08 Göteborg (SE)**

(72) Inventors:
• **ERDINC, Umur**
  **413 26 Göteborg (SE)**
• **HERMANSSON, Harald**
  **412 58 Göteborg (SE)**
• **OSCARSSON, Christian**
  **444 47 Stenungsund (SE)**
• **JACOBSON, Bengt**
  **435 38 Mölnlycke (SE)**
• **CHOUDHARY, Mukesh**
  **413 26 Göteborg (SE)**
• **TJÄRNLUND LEPPÄMÄKI, Joakim**
  **517 36 Bollebygd (SE)**

(74) Representative: **Zacco Sweden AB**
**P.O. Box 5581**
**Löjtnantsgatan 21**
**114 85 Stockholm (SE)**

(54) **METHOD OF CONTROLLING OPERATION OF A TRAILER**

(57) A method of controlling operation of a trailer (10) coupled to a towing vehicle (12), the method comprising: receiving (S1), from a wheel speed sensor (26) included in the trailer, a wheel speed (ws21) of the trailer; receiving (S2), from at least one axle load sensor (24a-c) included in the trailer, at least one axle load (Fz21, Fz22, Fz23) of the trailer; estimating (S3), by processing circuitry (30), an acceleration of the trailer based on the received wheel speed; calculating (S4), by the processing circuit, a mass based on the received at least one axle load; determining (S5), by the processing circuitry, a propulsion force (Fx21) to propel the trailer with using at least one electrical machine (20) arranged to drive at least one axle (18a) of the trailer, wherein the propulsion force is determined based on the estimated acceleration and the calculated mass; determining (S6), by the processing circuitry, a torque based on the determined propulsion force; and providing (S7) control parameters (32) based on the determined torque to the at least one electrical machine.

FIG. 1

EP 4 775 436 A1

## Description

## TECHNICAL FIELD

The disclosure relates generally to vehicle motion management. In particular aspects, the disclosure relates to a method of controlling operation of a trailer, such as a semitrailer. The disclosure can be applied to heavy-duty vehicles, such as trucks, among other vehicle types. Although the disclosure may be described with respect to a particular vehicle, the disclosure is not restricted to any particular vehicle.

## BACKGROUND

A semitrailer (or semi-trailer) is a trailer without a front axle. The semitrailer may be coupled to a tractor via a fifth wheel coupling, wherein the tractor conventionally pulls the semitrailer. Another type of trailer, sometimes called a full trailer, is supported by front and rear axles and pulled by a drawbar.

It has been contemplated equipping semitrailers with an electric motor on one of the axles of the semitrailer, resulting in an electric and/or partly self-propelled semitrailer. However, communication between the semitrailer and the tractor in the context of torque control may only allow the tractor to send a brake pressure request to the trailer.

## SUMMARY

According to a first aspect of the disclosure, there is provided a method of controlling operation of a trailer coupled to a towing vehicle, the method comprising: receiving, from a wheel speed sensor included in the trailer, a wheel speed of the trailer; receiving, from at least one axle load sensor included in the trailer, at least one axle load of the trailer; estimating, by processing circuitry, an acceleration of the trailer based on the received wheel speed; calculating, by the processing circuit, a mass based on the received at least one axle load; determining, by the processing circuitry, a propulsion force to propel the trailer with using at least one electrical machine arranged to drive at least one axle of the trailer, wherein the propulsion force is determined based on the estimated acceleration and the calculated mass; determining, by the processing circuitry, a torque based on the determined propulsion force; and providing control parameters based on the determined torque to the at least one electrical machine. The first aspect of the disclosure may seek to estimate or determine how much force the driven axle on the trailer should propel with, in particular without an extra method of communication between the towing vehicle and the trailer. A technical benefit may include that both the towing vehicle and the trailer can propel with a torque distribution being proportional to the axle load on the towing vehicle and trailer respectively, which in turn provides for improved stability of the towing vehicle and trailer combination. Moreover, the torque on the trailer may be controlled without an extra method of communication between the towing vehicle and the trailer. Moreover, both wheel speed and axle load sensors can readily be included in a trailer at a relatively low cost. The trailer may for example be a semitrailer. The towing vehicle may for example be a tractor.

Optionally in some examples, including in at least one preferred example, the acceleration of the trailer may be estimated by:

$$ws_{21} \cdot r_{21} = v_{21}$$

$$v_{21} \approx v_2$$

$$v_2' = a_2$$

where $ws_{21}$ the wheel speed, $r_{21}$ is the radius of a wheel associated with the wheel speed sensor, $v_{21}$ is the longitudinal velocity of the wheel, $v_2$ is the longitudinal speed of the trailer, and $a_2$ is the acceleration of the trailer.

Optionally in some examples, including in at least one preferred example, the at least one axle load used to calculate the mass may be a total axle load of the trailer being a semitrailer, wherein the mass used to determine the propulsion force is a mass equivalent of the total axle load. That is, only the weight applied on the semitrailer's axles is here used. A technical benefit may include that equal friction utilization of both units (towing vehicle and semitrailer) may be achieved.

Optionally in some examples, including in at least one preferred example, the propulsion force is at least partly determined by:

$$\frac{Fz_2}{g} = m_{Fz2}$$

$$m_{Fz2} \cdot a_2 = Fx_{21}$$

where $Fz_2$ is the total axle load, g is 9.82m/s$^2$, $m_{Fz2}$ is the mass equivalent of the total axle load, $a_2$ is the acceleration of the trailer, and $Fx_{21}$ is the propulsion force.

Optionally in some examples, including in at least one preferred example, the trailer may comprise at least one axle not driven by any electrical machine, wherein the at least one axle load used to calculate the mass is the axle load of the at least one axle driven by the at least one electrical machine, and wherein the mass used to determine the propulsion force is a mass equivalent of the axle load of the at least one axle driven by the at least one electrical machine. This will decrease the propulsion force.

Optionally in some examples, including in at least one preferred example, the mass used to determine the propulsion force may be the mass of the trailer. This will increase the propulsion force. To propel with this force will result in a longitudinal coupling force of 0 N. The trailer could here for example be a full trailer (i.e. a trailer supported by front and rear axles and coupled to a towing vehicle, such as a truck, via a drawbar), whereby a technical benefit may include that equal friction utilization of both units (towing vehicle and full trailer) may be achieved.

Optionally in some examples, including in at least one preferred example, the propulsion force may further be determined based on a current slope angle received from an inertial measurement unit included in the trailer. In this way, the slope's interference may be counter-acted.

Optionally in some examples, including in at least one preferred example, the propulsion force is at least partly determined by:

$$m_{Fz2} \cdot a_2 + sin(\alpha) \cdot m_{Fz2} \cdot g = Fx_{21}$$

where $m_{Fz2}$ is the mass equivalent of the total axle load, $a_2$ is the acceleration of the trailer, $\alpha$ is the current slope angle, g is 9.82m/s$^2$, and $Fx_{21}$ is the propulsion force.

Optionally in some examples, including in at least one preferred example, the propulsion force may further be determined based on a rolling resistance of the trailer's wheels. A technical benefit may include that the determined propulsion force may be refined.

Optionally in some examples, including in at least one preferred example, the propulsion force may further be determined based on an air resistance added by the trailer. A technical benefit may include that the determined propulsion force may be refined.

Optionally in some examples, including in at least one preferred example, the propulsion force further may be determined based on a factor capable of reducing the torque depending on (at least) one of: articulation angle between the trailer and the towing vehicle, side slip angle of the trailer, road friction, longitudinal velocity of the trailer, lateral acceleration of the trailer, and curvature of the road that the trailer is travelling on. In case the factor depends on articulation angle, the torque can be decreased when increasing the articulation angle, which results in a safer vehicle combination (towing vehicle+trailer) in turns. Moreover, the trailer propulsion force/torque may be reduced or lowered for: higher side slip angle of the trailer, lower road friction, higher longitudinal velocity of the trailer, higher lateral acceleration of the trailer, and/or higher curvature of the road that the trailer is travelling on.

Optionally in some examples, including in at least one preferred example, the factor may range from 1 to 0. This allows full torque utilization (1) down to no torque utilization (0) at all.

Optionally in some examples, including in at least one preferred example, the factor may depend on articulation angle between the trailer and the towing vehicle, wherein the factor is 1 up to a predetermined articulation angle, and wherein the factor decreases to 0 beyond the predetermined articulation angle. This allows full torque utilization up to the predetermined articulation angle (for example 15 degrees), then the factor may scale down rapidly to avoid failures, such as jackknifing.

Optionally in some examples, including in at least one preferred example, the propulsion force used to determine the torque may be limited by $\mu Fz_{21}$, where $\mu$ is the friction coefficient between the road and the tires of at least one axle that the at least one electrical machine is arranged to drive, and $Fz_{21}$ is the axle load of the at least one axle that the at least one electrical machine is arranged to drive. In this way, slipping may be avoided.

Optionally in some examples, including in at least one preferred example, the torque may be determined by:

$$Fx_{21} \cdot r_{21} = T_{21}$$

where $Fx_{21}$ is the propulsion force, $r_{21}$ is the radius of the wheels of the at least one axle driven by the at least one electrical machine, and $T_{21}$ is the torque. The (determined) torque may hence be a wheel torque.

Optionally in some examples, including in at least one preferred example, the method may further comprise: driving, by the at least one electrical machine, the at least one axle with the determined torque.

According to a second aspect of the disclosure, there is provided a computer program product comprising program code for performing, when executed by processing circuitry, the method of the first aspect of the disclosure.

According to a third aspect of the disclosure, there is provided a non-transitory computer-readable storage medium comprising instructions, which when executed by processing circuitry, cause the processing circuitry to perform the method of the first aspect of the disclosure.

According to a fourth aspect of the disclosure, there is provided a computer system configured to perform the method of the first aspect of the disclosure. The computer system may for example be an electronic control unit (ECU) for the at least one electrical machine of the trailer.

According to a fifth aspect of the disclosure, there is provided a trailer comprising the computer system according to the fourth aspect of the disclosure. The trailer may for example be a semitrailer or a full trailer.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

## BRIEF DESCRIPTION OF THE DRAWINGS

Examples are described in more detail below with reference to the appended drawings.

FIG. 1 is a schematic side view of an exemplary tractor and semitrailer combination according to an example.
FIG. 2 is a block diagram of part of the semitrailer in FIG. 1.
FIG. 3 is a flow chart of an exemplary method of controlling operation of a semitrailer according to an example.
FIG. 4 illustrates a factor depending on articulation angle between the semitrailer and tractor.
FIG. 5 is a schematic diagram of an exemplary computer system for implementing examples disclosed herein, according to an example.

## DETAILED DESCRIPTION

The detailed description set forth below provides information and examples of the disclosed technology with sufficient detail to enable those skilled in the art to practice the disclosure.

The disclosure may seek to estimate or determine how much force the driven axle on the trailer should propel with, in particular without an extra method of communication between the towing vehicle and the trailer. According to a first aspect of the disclosure, a method of controlling operation of a trailer being coupled to a towing vehicle comprises: receiving, from a wheel speed sensor included in the trailer, a wheel speed of the trailer; receiving, from at least one axle load sensor included in the trailer, at least one axle load of the trailer; estimating, by processing circuitry, an acceleration of the trailer based on the received wheel speed; calculating, by the processing circuit, a mass based on the received at least one axle load; determining, by the processing circuitry, a propulsion force to propel the trailer with using at least one electrical machine arranged to drive at least one axle of the trailer, wherein the propulsion force is determined based on the estimated acceleration and the calculated mass; determining, by the processing circuitry, a torque based on the determined propulsion force; and providing control parameters based on the determined torque to the at least one electrical machine. A technical benefit may include that both the towing vehicle and the trailer can propel with a torque distribution being proportional to the axle load on the towing vehicle and trailer respectively, which in turn provides for improved stability of the towing vehicle and trailer combination. Moreover, the torque on the trailer may be controlled without an extra method of communication between the towing vehicle and the trailer. Moreover, both wheel speed and axle load sensors can readily be included in a trailer at a relatively low cost.

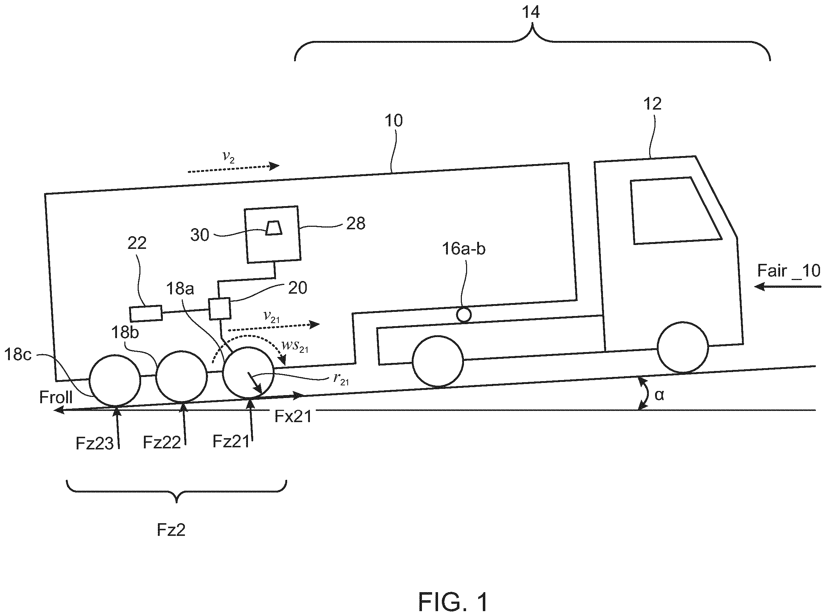

FIG. 1 illustrates a trailer, specifically a semitrailer 10 according to an example. However, the disclosure may also be applicable to a full trailer (not shown).

The semitrailer 10 may generally be configured for the transport of goods, materials, one or more vehicles, or the like. As such, the semitrailer 10 does not have a front axle. The semitrailer 10 is in FIG. 1 coupled to a tractor 12 (towing vehicle). The tractor 12 may generally be adapted to haul or pull the semitrailer 10. The tractor 12 may be an electric tractor, or it may be powered by an internal combustion engine, for example. The tractor 12 may also be referred to as a tractor truck or tractor unit. The semitrailer 10 coupled to the tractor 12 may collectively be referred to as a (vehicle) combination 14.

The semitrailer 10 may be coupled to the tractor 12 via a fifth wheel coupling 16a-b. The semitrailer's part 16a of the fifth wheel coupling is typically a kingpin protruding from the bottom of the front of the semitrailer 10. The tractor's part 16b of the fifth wheel coupling is typically a horseshoe-shaped coupling device ("fifth wheel"). The tractor's part 16b of the fifth wheel coupling may be provided on the rear of the tractor 12 itself, as in **FIG. 1.** Alternatively, the tractor's part 16b of the fifth wheel coupling could be provided on a dolly (not shown) pulled by the tractor 12.

The semitrailer 10 comprises at least one rear axle, for example a single axle or two axles or three axles 18a-c. Each (rear) axle 18a-c of the semitrailer 10 is provided with wheels.

The semitrailer 10 further comprises at least one electrical machine 20 arranged to drive at least one axle 18a of the semitrailer 10. As such, the semitrailer 10 may be referred to as an electric semitrailer 10 and/or a (partly) self-propelled semitrailer 10. The at least one electrical machine 20 may for example be at least one electric motor. The at least one electrical machine 20 may be powered by at least one battery 22 onboard the semitrailer 10. The at least one electrical machine 20 may for example be a single electrical machine/motor 20 arranged to drive one of the axles 18a-c of the semitrailer 10, such as the foremost axle 18a (as in **FIG. 1**), whereas the remaining axles 18b-c are not arranged to be driven by any electrical machine. Alternatively, the semitrailer 10 could have several electrical machines each arranged to drive a respective axle of the semitrailer 10, or two electrical machines arranged to drive one axle of the semitrailer 10, for example.

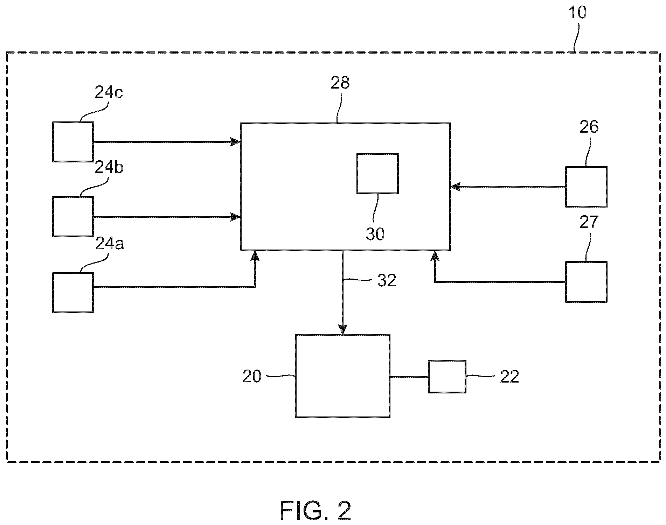

With further reference to **FIG. 2,** the semitrailer 10 further comprises at least one axle load sensor 24a-c. The semitrailer 10 may for example comprises one axle load sensor 24a-c per axle 18a-c of the semitrailer 10. The axle load sensors 24a-c may be adapted to measure the axle load Fz21, Fz22, Fz23 on each axle 18a-c of the semitrailer 10. That is, axle load sensor 24a may be adapted to measure the axle load Fz21 on axle 18a, and so on.

The semitrailer 10 further comprises a wheel speed sensor 26 on at least one of the axles 18a-c, such as on the foremost axle 18a. The wheel speed sensor 26 may be adapted to measure the current wheel speed of the semitrailer 10, for example the (current) rotational speed (in rad/s) of at least one wheel of the foremost axle 18a or of at least one wheel of one of the undriven axles 18b-c.

The semitrailer 10 may further comprise an inertial measurement unit (IMU) 27. The IMU 27 may allow the semitrailer 10 to sense the current slope angle α. That is, how steep uphill or downhill (or level ground) the semitrailer 10 is currently travelling.

The semitrailer 10 may further comprise an electronic control unit (ECU) 28 or other computer system. The electronic control unit 28 may comprise processing circuitry 30. The electronic control unit 28 may generally be configured to control the electrical machine(s) 20. The electronic control unit 28 may for example be configured to control the torque of the electrical machine(s) 20, as a torque controller. The electronic control unit 28 may be connected to the electrical machine(s) 20, the axle load sensors 24a-c, a wheel speed sensor 26, and the IMU 27, as indicated in **FIG. 2.**

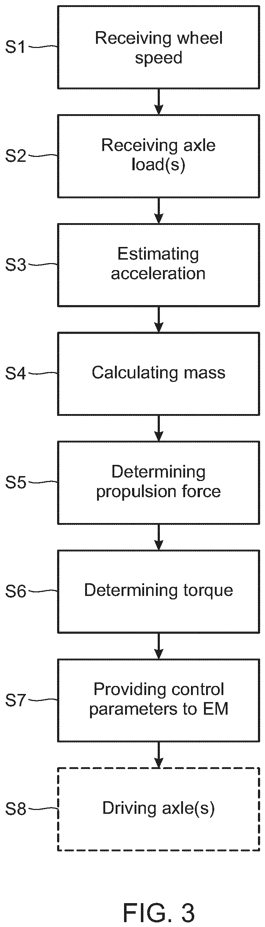

Turning to **FIG. 3, FIG. 3** is a flow chart of an exemplary method of controlling operation of the semitrailer 10 (when) coupled to the tractor 12 via the fifth wheel coupling. The method may at least partly be performed by the electronic control unit 28. The method may be (at least partly) computer-implemented.

The method comprises receiving S1, from the wheel speed sensor 26, a wheel speed ws21 of the semitrailer 10. The electronic control unit 28 may for example receive the current rotational speed (in rad/s) of at least one wheel of the foremost axle 18a.

The method further comprises receiving S2, from the at least one axle load sensor 24a-c, at least one axle load Fz21, Fz22, Fz23 (in Newtons) for at least one of the axles 18a-c of the semitrailer 10. The electronic control unit 28 may in a first example receive the axle load Fz21, Fz22, Fz23 for all the axles 18a-c from the axle load sensors 24a-c, whereby a total axle load Fz2 of the semitrailer 10 may be determined (e.g. by the processing circuitry 30) as the sum of the axle loads Fz21, Fz22, and Fz23. That is, Fz2 = Fz21 + Fz22 + Fz23. Alternatively, the electronic control unit 28 could receive the axle load for only one of the axles 18a-c (such as axle 18a), whereby the total axle load Fz2 of the semitrailer 10 may be determined or estimated (e.g. by the processing circuitry 30) by multiplying that axle load by the number of axles of the semitrailer 10. That is, Fz2 = 3 x Fz21.

The method further comprises estimating S3, by the processing circuitry 30, an acceleration of the semitrailer 10 based on the received wheel speed ws21. The acceleration of the semitrailer 10 may for example be estimated by:

$$ws_{21} \cdot r_{21} = v_{21} \quad [1]$$

$$v_{21} \approx v_2 \quad [2]$$

$$v_2^{'} = a_2 \quad [3]$$

where $ws_{21}$ the wheel speed, $r_{21}$ is the radius of a wheel (e.g. on axle 18a) associated with the wheel speed sensor 26, $v_{21}$ is the longitudinal velocity of the wheel (in m/s), $v_2$ is the longitudinal speed of the semitrailer 10, and $a_2$ is the acceleration of the semitrailer 10. That is, with the use of the wheel speed sensor 26, the longitudinal velocity can be found by multiplying the wheel speed with the wheel radius [1]. The longitudinal wheel speed can be assumed to be equal to the current longitudinal speed of the semitrailer [2]. And by calculating the derivative of the speed, the current acceleration can be found [3].

The method further comprises calculating S4, by the processing circuit 30, a mass based on the received at least one axle load Fz21, Fz22, Fz23. In the first example, the at least one axle load used to calculate the mass is the total axle load Fz2 of the semitrailer 10, and the mass can be calculated by dividing the total axle load Fz2 by g:

$$\frac{Fz_2}{g} = m_{Fz2} \quad [4]$$

where $Fz_2$ is the total axle load, g is 9.82m/s$^2$, and $m_{Fz2}$ is the mass equivalent of the total axle load.

The method further comprises determining S5, by the processing circuitry 30, a propulsion force Fx21 to propel the semitrailer 10 with using the at least one electrical machine arranged to drive at least one axle of the semitrailer 10 (such as electrical machine 20 arranged to drive the foremost axle 18a), wherein the propulsion force Fx21 is determined based on the estimated acceleration (from S3) and the calculated mass (from S4). In the first example, the propulsion force Fx21 can generally be determined by:

$$m_{Fz2} \cdot a_2 = Fx_{21} \quad [5]$$

where $m_{Fz2}$ is the mass equivalent of the total axle load, $a_2$ is the acceleration of the semitrailer, and $Fx_{21}$ is the propulsion force. That is, by multiplying the current acceleration with the mass corresponding to the total axle load, the required force to propel the semitrailer 10 with respect to the weight it is carrying on its axles can be calculated.

If the combination 14 including the semitrailer 10 is driving in a slope, this also should be accounted for. Specifically, the IMU 27 allows semitrailer 10 to sense the current slope angle, and the semitrailer 10 can thereby calculate (by the processing circuitry 30) the added required force to counter-act the slopes interference with the following formula:

$$sin(\alpha) \cdot m_{Fz2} \cdot g = Fx_{slope} \quad [6]$$

where $\alpha$ is the current slope angle, $m_{Fz2}$ is the mass equivalent of the total axle load, g is 9.82m/s$^2$, and $Fx_{21}$ is the added required force to counter-act the slopes interference. Combining [5] and [6], the propulsion force Fx21 may in S5 be determined by:

$$m_{Fz2} \cdot a_2 + sin(\alpha) \cdot m_{Fz2} \cdot g = Fx_{21} \quad [7]$$

The air resistance Fair_10 added by the semitrailer 10 and/or the rolling resistance Froll of the semitrailer's wheels can also be calculated and taken into consideration by the semitrailer 10 when calculating/determining the propulsion force Fx21 in S5. The air resistance Fair_10 and the rolling resistance Froll may be calculated in manners known per se. Adding Fair_10 and Froll to [7] gives the following equation:

$$m_{Fz2} \cdot a_2 + sin(\alpha) \cdot m_{Fz2} \cdot g + F_{air\_10} + F_{roll} = Fx_{21} \quad [8]$$

The method may further comprise determining S6, by the processing circuitry 30, a torque based on the propulsion force Fx21. The torque may for example be determined by:

$$Fx_{21} \cdot r_{21} = T_{21} \quad [9]$$

where $Fx_{21}$ is the propulsion force, $r_{21}$ is the radius of the wheels of the at least one axle driven by the at least one electrical machine (such as foremost axle 18a driven by electrical machine 20), and $T_{21}$ is the torque. The torque may hence be referred to as a wheel torque.

The method may further comprise providing S7 (by the electronic control unit 28) control parameters 32 based on the determined torque to the at least one electrical machine such as electrical machine 20 arranged to drive the axle 18a. The control parameters 32 may for example include or signify an electrical machine torque value (or motor torque) for the electrical machine 20 to achieve the determined wheel torque $T_{21}$ (taking into account any gear ratio in between). It should be noted that if the semitrailer 10 has say two electrical machines arranged to drive either two axles or one axle of the semitrailer 10, the determined propulsion force Fx21 may basically be divided by 2 to get the propulsion force/torque for each electrical machine.

The method may further comprise driving S8, by the electrical machine 20, the axle 18a (in accordance) with the determined wheel torque, as a result of step S7.

The method (e.g. steps S1-S7 or steps S1-S8) may repeatedly and/or continuously be performed when the semitrailer 10 is hauled or pulled by the tractor 12, taking into account e.g. the current wheel speed and slope angle. Moreover, steps S1 and S3 may in practice and within the scope of the present disclosure be performed substantially in parallel with steps S2 and S4. Moreover, steps S5 and S6 may in practice and within the scope of the present disclosure be performed in one operation.

Instead of using the mass equivalent $m_{Fz2}$ of the axle loads Fz2 on the semitrailer 10 as in the first example mentioned above, the axle load(s) used to calculate the mass in step S4 may in a second example be the axle load Fz21 of one the axle 18a driven by the electrical machine 20, wherein the mass used to determine the propulsion force Fx21 in step S5 is a mass equivalent of the axle load Fz21 of the axle 18a, namely Fz21/g. This will decrease the propulsion force Fx21 compared to the first example.

In a third example, the mass used to determine the propulsion force Fx21 in step S5 may be the whole mass of the semitrailer 10. Here, the axle load sensors 24a-c can be used to find the axle force, and the center of gravity on the semitrailer 10 can be estimated, and thereby, even though the vertical load in the fifth wheel coupling 16a-b is unknown, the mass of the semitrailer 10 can be estimated. The required propulsion force Fx21 can then be calculated by multiplying the mass of the semitrailer 10 with the longitudinal acceleration $a_2$, similar to [5]. In the third example, propulsion force Fx21 will be increased compared to the first example. For a full trailer, the (whole) mass may be calculated based on the total axle load of the full trailer.

To further control the torque in a turn, a factor β dependent on the current articulation angle between the semitrailer 12 and the tractor 10 could be used. By assuming that the articulation angle is known, either by an articulation angle senor (not shown) on the semitrailer 10 or by an estimation by the difference in wheel speed on the two sides of the semitrailer, the torque can be decreased when increasing the articulation angle, which results in a safer vehicle combination 14 in turns. Accordingly, the propulsion force Fx21 may in S5 be determined by:

$$(m_{Fz2} \cdot a_2 + sin(\alpha) \cdot m_{Fz2} \cdot g + F_{air\_10} + F_{roll})\beta = Fx_{21} \quad [10]$$

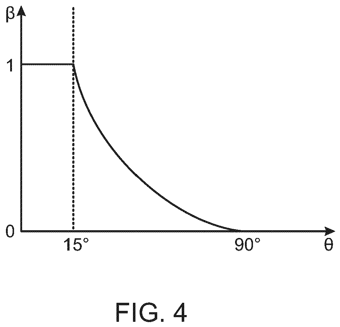

β may be a factor from a function used to calculate the scaling of force Fz2 on the driven axle 18a ranging from 1 to 0. **FIG. 4** is an example where the factor β depends on the articulation angle θ between the between the semitrailer 12 and the tractor 10. The factor β in **FIG. 4** allows full torque utilization up to 15 degrees, then it scales down rapidly. This may result in a safer vehicle combination 14 in turns.

The factor β may also or alternatively depend on one or more other parameters, such as side slip angle of the semitrailer 10, road friction, longitudinal velocity of the semitrailer 10, lateral acceleration of the semitrailer 10, and/or curvature of the road that the semitrailer 10 is travelling on. Specifically, the propulsion force Fx21/torque $T_{21}$ may be reduced or lowered for: higher side slip angle of the semitrailer 10, lower road friction, higher longitudinal velocity of the semitrailer 10, higher lateral acceleration of the semitrailer 10, and/or higher curvature of the road that the semitrailer 10 is travelling on.

The propulsion force Fx21 may be limited by $\mu Fz_{21}$, where μ is the friction coefficient between the road and the tires of the axle 18a that the electrical machine 20 is arranged to drive, and $Fz_{21}$ is the axle load of the axle 18a. This is due to friction, and $\mu Fz_{21}$ is the maximum force that can be utilized before slipping. Hence, should the propulsion force Fx21 determined by the electronic control unit 28 in step S5 be larger than $\mu Fz_{21}$, the electronic control unit 28 may be configured to "instead" use $\mu Fz_{21}$ when determining the torque in step S6. The friction coefficient μ may for example be estimated or measured by a sensor on the semitrailer 10.

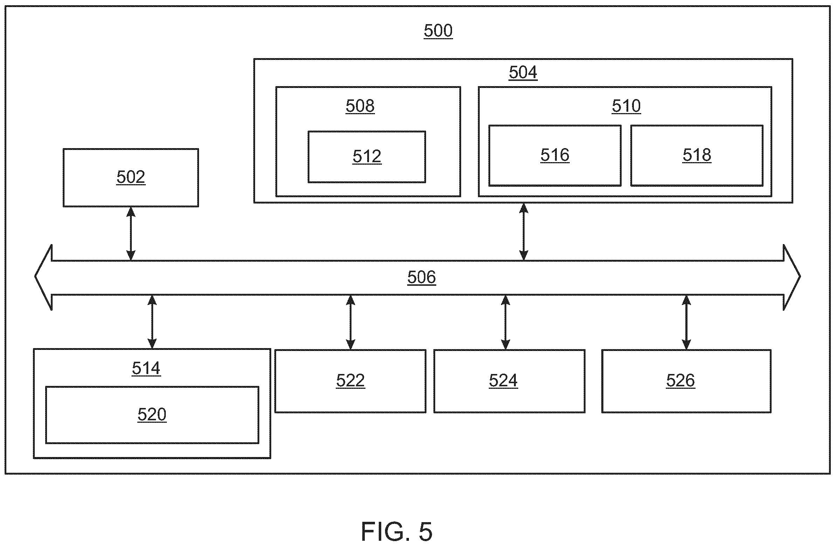

**FIG. 5** is a schematic diagram of a computer system 500 for implementing examples disclosed herein, such as the electronic control unit 28. The computer system 500 is adapted to execute instructions from a computer-readable medium to perform these and/or any of the functions or processing described herein. The computer system 500 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 500 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system 500 may include processing circuitry 502 (e.g., processing circuitry including one or more processor devices or control units) such as processing circuitry 30, a memory 504, and a system bus 506. The computer system 500 may include at least one computing device having the processing circuitry 502. The system bus 506 provides an interface for system components including, but not limited to, the memory 504 and the processing circuitry 502. The processing circuitry 502 may include any number of hardware components for conducting data or signal processing or for executing computer code stored in memory 504. The processing circuitry 502 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 502 may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processing circuitry 502 (e.g., via a circuit or any other wired, wireless, or network connection) and may include computer code for executing one or more processes described herein. The memory 504 may include non-volatile memory 508 (e.g., read-only memory (ROM), erasable programmable read-only memory (EPROM), electrically erasable programmable read-only memory (EEPROM), etc.), and volatile memory 510 (e.g., random-access memory (RAM)), or any other medium which can be used to carry or store desired program code in the form of machine-executable instructions or data structures and which can be accessed by a computer or other machine with processing circuitry 502. A basic input/output system (BIOS) 512 may be stored in the non-volatile memory 508 and can include the basic routines that help to transfer information between elements within the computer system 500.

The computer system 500 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program 520 stored on a transitory or non-transitory computer-usable or computer-readable storage medium (e.g., single medium or multiple media), such as the storage device 514, which includes complex programming instructions (e.g., complex computer-readable program code) to cause the processing circuitry 502 to carry out actions described herein. Thus, the computer-readable program code of the computer program 520 can comprise software instructions for implementing the functionality of the examples described herein when executed by the processing circuitry 502. In some examples, the storage device 514 may be a computer program product (e.g., readable storage medium) storing the computer program 520 thereon, where at least a portion of a computer program 520 may be loadable (e.g., into a processor) for implementing the functionality of the examples described herein when executed by the processing circuitry 502. The processing circuitry 502 may serve as a controller or control system for the computer system 500 that is to implement the functionality described herein.

The computer system 500 may include an input device interface 522 configured to receive input and selections to be communicated to the computer system 500 when executing instructions, such as from a keyboard, mouse, touch-sensitive surface, etc. Such input devices may be connected to the processing circuitry 502 through the input device interface 522 coupled to the system bus 506 but can be connected through other interfaces, such as a parallel port, an Institute of Electrical and Electronic Engineers (IEEE) 1394 serial port, a Universal Serial Bus (USB) port, an IR interface, and the like. The computer system 500 may include an output device interface 524 configured to forward output, such as to a display, a video display unit (e.g., a liquid crystal display (LCD) or a cathode ray tube (CRT)). The computer system 500 may include a communications interface 526 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A method of controlling operation of a trailer coupled to a towing vehicle, the method comprising: receiving, from a wheel speed sensor included in the trailer, a wheel speed of the trailer; receiving, from at least one axle load sensor included in the trailer, at least one axle load of the trailer; estimating, by processing circuitry, an acceleration of the trailer based on the received wheel speed; calculating, by the processing circuit, a mass based on the received at least one axle load; determining, by the processing circuitry, a propulsion force to propel the trailer with using at least one electrical machine arranged to drive at least one axle of the trailer, wherein the propulsion force is determined based on the estimated acceleration and the calculated mass; determining, by the processing circuitry, a torque based on the determined propulsion force; and providing control parameters based on the determined torque to the at least one electrical machine.

Example 2: The method of example 1, wherein the acceleration of the trailer is estimated by:

$$ws_{21} \cdot r_{21} = v_{21}$$

$$v_{21} \approx v_2$$

$$v_2' = a_2$$

where $ws_{21}$ the wheel speed, $r_{21}$ is the radius of a wheel associated with the wheel speed sensor, $v_{21}$ is the longitudinal velocity of the wheel, $v_2$ is the longitudinal speed of the trailer, and $a_2$ is the acceleration of the trailer.

Example 3: The method of any of examples 1-2, wherein the at least one axle load used to calculate the mass is a total axle load of the trailer being a semitrailer, and wherein the mass used to determine the propulsion force is a mass equivalent of the total axle load.

Example 4: The method of example 3, wherein the propulsion force is at least partly determined by:

$$\frac{Fz_2}{g} = m_{Fz2}$$

$$m_{Fz2} \cdot a_2 = Fx_{21}$$

where $Fz_2$ is the total axle load, $g$ is 9.82m/s$^2$, $m_{Fz2}$ is the mass equivalent of the total axle load, $a_2$ is the acceleration of the trailer, and $Fx_{21}$ is the propulsion force.

Example 5: The method of any of examples 1-2, wherein the trailer comprises at least one axle not driven by any electrical machine, wherein the at least one axle load used to calculate the mass is the axle load of the at least one axle driven by the at least one electrical machine, and wherein the mass used to determine the propulsion force is a mass equivalent of the axle load of the at least one axle driven by the at least one electrical machine.

Example 6: The method of any of examples 1-2, wherein the mass used to determine the propulsion force is the mass of the trailer.

Example 7: The method of any of examples 1-6, wherein the propulsion force further is determined based on a current slope angle received from an inertial measurement unit included in the trailer.

Example 8: The method of examples 4 and 7, wherein the propulsion force is at least partly determined by:

$$m_{Fz2} \cdot a_2 + sin(\alpha) \cdot m_{Fz2} \cdot g = Fx_{21}$$

where $m_{Fz2}$ is the mass equivalent of the total axle load, $a_2$ is the acceleration of the trailer, $\alpha$ is the current slope angle, g is 9.82m/s$^2$, and $Fx_{21}$ is the propulsion force.

Example 9: The method of any of examples 1-8, wherein the propulsion force further is determined based on a rolling resistance of the trailer's wheels.

Example 10: The method of any of examples 1-9, wherein the propulsion force further is determined based on an air resistance added by the trailer.

Example 11: The method of any of examples 1-10, wherein the propulsion force further is determined based on a factor capable of reducing the torque depending on one of: articulation angle between the trailer and the towing vehicle, side slip angle of the trailer, road friction, longitudinal velocity of the trailer, lateral acceleration of the trailer, and curvature of the road that the trailer is travelling on.

Example 12: The method of example 11, wherein the factor ranges from 1 to 0.

Example 13: The method of any of examples 11-12, wherein the factor depends on articulation angle between the trailer and the towing vehicle, wherein the factor is 1 up to a predetermined articulation angle, and wherein the factor decreases to 0 beyond the predetermined articulation angle.

Example 14: The method of any of examples 1-13, wherein the propulsion force used to determine the torque is limited by $\mu Fz_{21}$, where $\mu$ is the friction coefficient between the road and the tires of at least one axle that the at least one electrical machine is arranged to drive, and $Fz_{21}$ is the axle load of the at least one axle that the at least one electrical machine is arranged to drive.

Example 15: The method of any of examples 1-14, wherein the torque is determined by:

$$Fx_{21} \cdot r_{21} = T_{21}$$

where $Fx_{21}$ is the propulsion force, $r_{21}$ is the radius of the wheels of the at least one axle driven by the at least one electrical machine (20), and $T_{21}$ is the torque.

Example 16: The method of any of examples 1-15, further comprising: driving, by the at least one electrical machine, the at least one axle with the determined torque.

Example 17: A computer program product comprising program code for performing, when executed by processing circuitry, the method of any of examples 1-15.

Example 18: A non-transitory computer-readable storage medium comprising instructions, which when executed by processing circuitry, cause the processing circuitry to perform the method of any of examples 1-15.

Example 19: A computer system configured to perform the method of any of examples 1-15.

Example 20: A trailer comprising the computer system according to example 19.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

**Claims**

1. A method of controlling operation of a trailer (10) coupled to a towing vehicle (12), the method comprising:

   receiving (S 1), from a wheel speed sensor (26) included in the trailer (10), a wheel speed (ws21) of the trailer (10);
   receiving (S2), from at least one axle load sensor (24a-c) included in the trailer (10), at least one axle load (Fz21, Fz22, Fz23) of the trailer (10);
   estimating (S3), by processing circuitry (30), an acceleration of the trailer (10) based on the received wheel speed (ws21);
   calculating (S4), by the processing circuit (30), a mass based on the received at least one axle load (Fz21, Fz22, Fz23);
   determining (S5), by the processing circuitry (30), a propulsion force (Fx21) to propel the trailer (10) with using at least one electrical machine (20) arranged to drive at least one axle (18a) of the trailer (10), wherein the propulsion force (Fx21) is determined based on the estimated acceleration and the calculated mass;
   determining (S6), by the processing circuitry (30), a torque based on the determined propulsion force (Fx21); and
   providing (S7) control parameters (32) based on the determined torque to the at least one electrical machine (20).

2. The method of claim 1, wherein the acceleration of the trailer (10) is estimated by:

$$ws_{21} \cdot r_{21} = v_{21}$$

$$v_{21} \approx v_2$$

$$v_2^{'} = a_2$$

   where $ws_{21}$ the wheel speed, $r_{21}$ is the radius of a wheel associated with the wheel speed sensor (26), $v_{21}$ is the longitudinal velocity of the wheel, $v_2$ is the longitudinal speed of the trailer (10), and $a_2$ is the acceleration of the trailer (10).

3. The method of any of claims 1-2, wherein the at least one axle load used to calculate the mass is a total axle load (Fz2) of the trailer being a semitrailer (10), and wherein the mass used to determine the propulsion force (Fx21) is a mass equivalent of the total axle load (Fz2).

4. The method of any of claims 1-2, wherein the trailer (10) comprises at least one axle (18b-c) not driven by any electrical machine, wherein the at least one axle load used to calculate the mass is the axle load (Fz21) of the at least one axle (18a) driven by the at least one electrical machine (20), and wherein the mass used to determine the propulsion force (Fx21) is a mass equivalent of the axle load (Fz21) of the at least one axle (18a) driven by the at least one electrical machine (20).

5. The method of any of claims 1-2, wherein the mass used to determine the propulsion force (Fx21) is the mass (m2) of the trailer (10).

6. The method of any of claims 1-5, wherein the propulsion force further is determined based on a current slope angle ($\alpha$) received from an inertial measurement unit (26) included in the trailer.

7. The method of claims 3 and 6, wherein the propulsion force is at least partly determined by:

$$m_{Fz2} \cdot a_2 + sin(\alpha) \cdot m_{Fz2} \cdot g = Fx_{21}$$

   where $m_{Fz2}$ is the mass equivalent of the total axle load, $a_2$ is the acceleration of the trailer, $\alpha$ is the current slope angle, $g$ is 9.82m/s$^2$, and $Fx_{21}$ is the propulsion force.

8. The method of any of claims 1-7, wherein the propulsion force further is determined based on at least one of a rolling resistance (Froll) of the trailer's wheels; and an air resistance (Fair _10) added by the trailer (10).

EP 4 775 436 A1

9. The method of any of claims 1-8, wherein the propulsion force further is determined based on a factor capable of reducing the torque depending on one of articulation angle between the trailer (10) and the towing vehicle (12), side slip angle of the trailer (10), road friction, longitudinal velocity of the trailer (10), lateral acceleration of the trailer (10), and curvature of the road that the trailer (10) is travelling on.

10. The method of claim 9, wherein the factor ($\beta$) depends on articulation angle ($\theta$) between the trailer (10) and the towing vehicle (12), wherein the factor is 1 up to a predetermined articulation angle, and wherein the factor decreases to 0 beyond the predetermined articulation angle.

11. The method of any of claims 1-10, wherein the propulsion force used to determine the torque is limited by $\mu Fz_{21}$, where $\mu$ is the friction coefficient between the road and the tires of at least one axle (18a) that the at least one electrical machine (20) is arranged to drive, and $Fz_{21}$ is the axle load of the at least one axle (18a) that the at least one electrical machine (20) is arranged to drive.

12. The method of any of claims 1-11, wherein the torque is determined by:

$$Fx_{21} \cdot r_{21} = T_{21}$$

where $Fx_{21}$ is the propulsion force, $r_{21}$ is the radius of the wheels of the at least one axle (18a) driven by the at least one electrical machine (20), and $T_{21}$ is the torque.

13. A computer program product comprising program code for performing, when executed by processing circuitry (30), the method of any of claims 1-12.

14. A computer system (28) configured to perform the method of any of claims 1-12.

15. A trailer (10) comprising the computer system (28) according to claim 14.

FIG. 1

EP 4 775 436 A1

FIG. 2

S1 — Receiving wheel speed

S2 — Receiving axle load(s)

S3 — Estimating acceleration

S4 — Calculating mass

S5 — Determining propulsion force

S6 — Determining torque

S7 — Providing control parameters to EM

S8 — Driving axle(s)

FIG. 3

FIG. 4

FIG. 5

Europäisches
Patentamt
European
Patent Office
Office européen
des brevets

# EUROPEAN SEARCH REPORT

**Application Number**

EP 25 15 1499

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/135041 A1 (HESEDING JOHANNES [DE] ET AL) 5 May 2022 (2022-05-05) | 1,4,9, 10,13-15 | INV. B60L15/20 |
| Y | * abstract; figure 1 * | 3,5-8, 11,12 | B62D59/00 |
| A | | 2 | |
| | ----- | | |
| Y | EP 4 090 548 B1 (VOLVO TRUCK CORP [SE]) 13 December 2023 (2023-12-13) * abstract; figure 2 * | 5,8,11, 12 | |
| | ----- | | |
| Y | DE 10 2022 116596 A1 (ZF CV SYSTEMS GLOBAL GMBH [CH]) 4 January 2024 (2024-01-04) * abstract; figure 1 * | 3 | |
| | ----- | | |
| Y | EP 3 353 023 B1 (KNORR BREMSE SYSTEME FUER NUTZFAHRZEUGE GMBH [DE]) 17 March 2021 (2021-03-17) * paragraph [0050] - paragraph [0055] * | 6,7 | |
| | ----- | | |
| A | US 2022/185121 A1 (SAWADA AKIRA [JP] ET AL) 16 June 2022 (2022-06-16) * abstract; figure 2 * | 1-15 | **TECHNICAL FIELDS SEARCHED (IPC)** |
| | ----- | | B60L |
| A | EP 3 851 346 A1 (VOLVO TRUCK CORP [SE]) 21 July 2021 (2021-07-21) * abstract; figures 1-3 * | 1-15 | B62D |
| | ----- | | |

The present search report has been drawn up for all claims

| Place of search | Date of completion of the search | Examiner |
|---|---|---|
| The Hague | 30 June 2025 | Arias Pérez, Jagoba |

EPO FORM 1503 03.82 (P04C01)

2

## ANNEX TO THE EUROPEAN SEARCH REPORT
## ON EUROPEAN PATENT APPLICATION NO.

EP 25 15 1499

This annex lists the patent family members relating to the patent documents cited in the above-mentioned European search report.
The members are as contained in the European Patent Office EDP file on
The European Patent Office is in no way liable for these particulars which are merely given for the purpose of information.

30-06-2025

| Patent document cited in search report | | | Publication date | Patent family member(s) | | | Publication date |
|---|---|---|---|---|---|---|---|
| US 2022135041 | A1 | | 05-05-2022 | CN | 114007916 | A | 01-02-2022 |
| | | | | DE | 102019119786 | A1 | 28-01-2021 |
| | | | | EP | 4003771 | A1 | 01-06-2022 |
| | | | | US | 2022135041 | A1 | 05-05-2022 |
| | | | | WO | 2021013541 | A1 | 28-01-2021 |
| EP 4090548 | B1 | | 13-12-2023 | BR | 112022013830 | A2 | 13-09-2022 |
| | | | | CN | 114945487 | A | 26-08-2022 |
| | | | | EP | 4090548 | A1 | 23-11-2022 |
| | | | | JP | 2023510539 | A | 14-03-2023 |
| | | | | JP | 2024153706 | A | 29-10-2024 |
| | | | | KR | 20220124796 | A | 14-09-2022 |
| | | | | US | 2023068987 | A1 | 02-03-2023 |
| | | | | WO | 2021144009 | A1 | 22-07-2021 |
| DE 102022116596 | A1 | | 04-01-2024 | NONE | | | |
| EP 3353023 | B1 | | 17-03-2021 | CN | 108349472 | A | 31-07-2018 |
| | | | | DE | 102015115851 | A1 | 23-03-2017 |
| | | | | EP | 3353023 | A1 | 01-08-2018 |
| | | | | WO | 2017050554 | A1 | 30-03-2017 |
| US 2022185121 | A1 | | 16-06-2022 | CN | 113631416 | A | 09-11-2021 |
| | | | | EP | 3950402 | A1 | 09-02-2022 |
| | | | | JP | 7201071 | B2 | 10-01-2023 |
| | | | | JP | WO2020194621 | A1 | 01-10-2020 |
| | | | | US | 2022185121 | A1 | 16-06-2022 |
| | | | | WO | 2020194621 | A1 | 01-10-2020 |
| EP 3851346 | A1 | | 21-07-2021 | CN | 114454865 | A | 10-05-2022 |
| | | | | CN | 114454866 | A | 10-05-2022 |
| | | | | CN | 114938644 | A | 23-08-2022 |
| | | | | EP | 3851345 | A1 | 21-07-2021 |
| | | | | EP | 3851346 | A1 | 21-07-2021 |
| | | | | EP | 4090561 | A1 | 23-11-2022 |
| | | | | JP | 7411102 | B2 | 10-01-2024 |
| | | | | JP | 2022068844 | A | 10-05-2022 |
| | | | | JP | 2023517445 | A | 26-04-2023 |
| | | | | KR | 20220054209 | A | 02-05-2022 |
| | | | | KR | 20220122769 | A | 02-09-2022 |
| | | | | US | 2022126799 | A1 | 28-04-2022 |
| | | | | US | 2022126801 | A1 | 28-04-2022 |
| | | | | US | 2023339477 | A1 | 26-10-2023 |
| | | | | WO | 2021144010 | A1 | 22-07-2021 |

EPO FORM P0459

For more details about this annex : see Official Journal of the European Patent Office, No. 12/82